# EUROPÄISCHE PATENTANMELDUNG

(11) **EP 1 344 660 A1**
(43) Veröffentlichungstag der Anmeldung: **17.09.2003**
(21) Anmeldenummer: 02102688.5
(22) Anmeldetag: 05.12.2002
(51) Int. Cl.: B60G 3/26, B60G 3/06

(54) **Radaufhängung für ein Kraftfahrzeug**

(30) Priorität: 14.12.2001 EP 01129784
(71) Anmelder: Ford Global Technologies, Inc., A subsidiary of Ford Motor Company, Dearborn, Michigan 48126 (US)
(72) Erfinder: Frantzen, Michael Johannes, 52076, Aachen (DE)
(74) Vertreter: Drömer, Hans-Carsten, Dr.-Ing.

(57) **Zusammenfassung**

Die Erfindung betrifft eine Radaufhängung für ein Kraftfahrzeug, wobei der Achsschenkel (1) an einem Träger (3) um eine vertikale Achse (6) drehbeweglich befestigt ist. Die vertikale Achse (6) läuft dabei näherungsweise durch das Zentrum (Z) des Rades. Der Träger (3) ist ferner an seinem unteren Ende über einen Lenker (8) mit der Karosserie gekoppelt, wobei der Lenker (8) schwenkbeweglich an der Karosserie gelagert ist. Anstelle des Achsschenkels (1) kann auch eine Spindel um eine vertikale Achse durch das Radzentrum drehbeweglich gelagert sein.

## Beschreibung

Die Erfindung betrifft eine Radaufhängung für ein Kraftfahrzeug enthaltend: ein Lagerelement für die Radachse; einen Träger, an welchem das Lagerelement bezüglich einer im Wesentlichen vertikalen Achse drehbar gelagert ist, wobei die vertikale Achse nahe dem Radzentrum verläuft; ein Federbein, das mit dem Träger verbunden und an der Karosserie abgestützt ist; einen Lenker, welcher mit der Karosserie gekoppelt und mit dem Träger in einem Scharniergelenk verbunden ist.

Eine Radaufhängung der eingangs genannten Art ist aus der DE 42 06 896 A1 bekannt. Das Rad des Kraftfahrzeugs wird hierbei mit seiner Drehachse an einem Achsschenkel gelagert. Der Achsschenkel ist um eine im Wesentlichen senkrechte Achse drehbar an einem Träger gelagert, welcher mit einem an der Karosserie abgestützten Federbein fest verbunden ist. Ferner ist der Träger schwenkbeweglich mit einem Querträger gekoppelt, welcher kardanisch an der Karosserie gelagert ist. Um den Achsschenkel zu stabilisieren und unerwünschte Drehungen des Federbeines zu verhindern, ist der Achsschenkel über einen weiteren Lenker mit der Karosserie verbunden. Gegenüber einer gewöhnlichen Radaufhängung vom sog. McPherson Typ, bei welcher das Lagerelement und der Träger fest verbunden bzw. einstückig sind, erfordert die beschriebene Radaufhängung zusätzliche Bauelemente und vor allem Anlenkpunkte an der Karosserie.

Eine andere Radaufhängung ist aus der DE 44 09 571 A1 bekannt. Hierbei handelt es sich um eine auf der McPherson-Achse basierende Federbeinachse mit einem Achsschenkel, an welchem ein Rad des Kraftfahrzeugs mit seiner Drehachse gelagert ist. Der Achsschenkel ist ferner über ein Federbein bestehend aus einem Dämpferkolben und einer Spiralfeder sowie über einen Querlenker mit der Karosserie gekoppelt. Um die Tendenz einer derartigen Radaufhängung zu Lenkradschwingungen und einem unruhigen Lauf zu verringern, wird gemäß der DE 44 09 571 A1 der Dämpferzylinder verdrehsicher gelagert, was insbesondere durch einen zusätzlich daran angebrachten und mit der Karosserie gekoppelten Lenker geschehen kann.

Vor diesem Hintergrund war es Aufgabe der vorliegenden Erfindung, eine vereinfachte Radaufhängung bereitzustellen, welche eine geringe Übertragung von Störungen und Schwingungen aufweist.

Diese Aufgabe wird durch eine Radaufhängung mit den Merkmalen des Anspruchs 1 gelöst. Vorteilhafte Ausgestaltungen sind in den Unteransprüchen enthalten.

Die erfindungsgemäße Radaufhängung für ein Kraftfahrzeug enthält ein Lagerelement für die Drehachse des aufzuhängenden Rades. Bei dem Rad kann es sich um ein angetriebenes oder nicht angetriebenes Vorderrad des Kraftfahrzeugs handeln. Das Lagerelement kann insbesondere ein Achsschenkel oder eine Spindel sein. Es ist an einem Träger bezüglich einer im Wesentlichen vertikalen Achse drehbar gelagert, wobei die vertikale Achse in enger Nähe an dem Radzentrum bzw. Radmittelpunkt vorbeiläuft. Dies soll natürlich insbesondere den Fall einschließen, daß die vertikale Achse durch das Radzentrum verläuft. Durch die drehbare Lagerung des Lagerelementes um die erläuterte vertikale Achse wird gegenüber der herkömmlichen McPherson-Achse ein zusätzlicher Freiheitsgrad eingeführt. Der Bremskrafthebel sowie der Beschleunigungskrafthebel und der Stoßradius lassen sich somit beliebig einstellen, wobei diese Größen bevorzugt minimiert werden. Auf diese Weise wird die Erzeugung und Weiterleitung von störenden Schwingungen und Kräften minimiert.

Weiterhin ist der Träger des Lagerelementes an seinem unteren Ende in einem Scharniergelenk mit einem mit der Karosserie gekoppelten Lenker verbunden. Die Fixierung des unteren Endes des Trägers in einem Gelenk verringert dessen Freiheitsgrade entsprechend und führt zu einer erhöhten Steifigkeit des Systems.

Ferner ist der Träger direkt oder indirekt über ein Federbein mit der Karosserie gekoppelt. Ein Federbein besteht in bekannter Weise aus einem Dämpferkolben und einer Schraubendruckfeder und sorgt für eine gedämpfte, elastische Abstützung des Rades an der Karosserie.

Die Radaufhängung ist dadurch gekennzeichnet, daß der genannte Lenker drehbeweglich um eine (einzige) Achse an der Karosserie gelagert ist. Dies hat den Vorteil, daß dieser den Träger und damit auch das Federbein gegen Verdrehungen versteift, ohne daß hierzu weitere Lenker am Träger und/oder am Lagerelement erforderlich wären. Die Radaufhängung kommt daher mit denselben Anlenkpunkten an der Karosserie - d.h. eine Abstützung für das Federbein und eine schwenkbewegliche Lagerung für den (Quer-)Lenker - aus wie eine herkömmliche McPherson-Achse. Dies ermöglicht es, beide Arten der Radaufhängung wahlweise bei demselben Fahrzeugtyp einzusetzen und auf diese Weise z.B. eine kostengünstigere und eine höherwertige Fahrzeugvariante zu schaffen.

Im Folgenden wird die Erfindung mit Hilfe der Figuren beispielhaft näher erläutert.

Es zeigen:
- Fig. 1: schematisch eine Seitenansicht einer erfindungsgemäßen Radaufhängung vom McPherson-Typ;
- Fig. 2: eine detailliertere perspektivische Darstellung der Radaufhängung gemäß Figur 1;
- Fig. 3: eine schematische Darstellung einer Radaufhängung vom Typ mit zwei Querlenkern;
- Fig. 4: eine detailliertere perspektivische Darstellung der Radaufhängung nach Figur 3, und
- Fig. 5: einen Teil einer erfindungsgemäßen Radaufhängung mit einer Spindel.

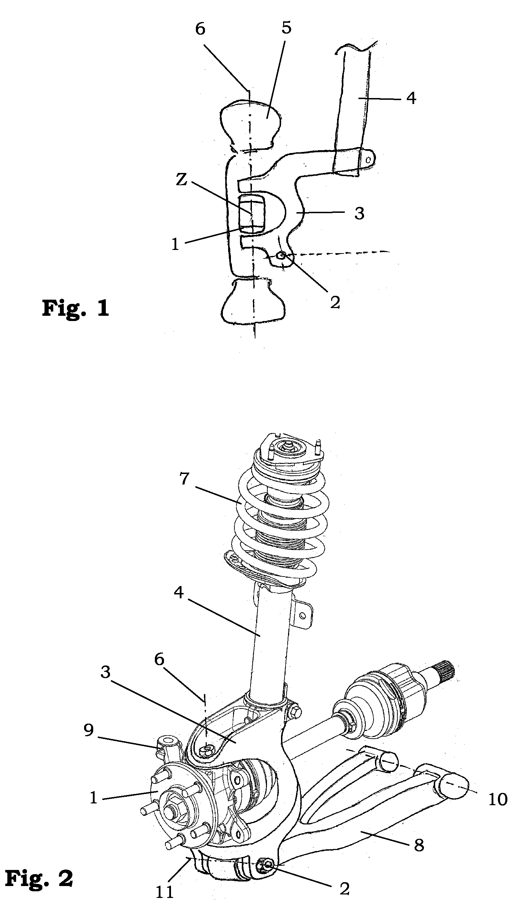

Figur 1 zeigt in einer schematischen Seitenansicht eine erfindungsgemäße Radaufhängung, welche in ihrer Konstruktion von der sogenannten McPherson-Achse ausgeht. Bei Letzterer handelt es sich um eine Einzelradaufhängung, bei der ein Achsschenkel unten an einem schwenkbeweglich an der Karosserie gelagerten Querlenker und oben an einem Schwingungsdämpferrohr ("McPherson-Federbein") gelagert ist. Das Schwingungsdämpferrohr ersetzt somit den oberen Querlenker einer Doppelquerlenkerachse (vgl. "Fachkunde Kraftfahrzeugtechnik", 26. Auflage, Verlag Europa Lehrmittel, Haan-Gruiten, Kap. 4.5.3). Die Lagerung des Querlenkers an der Karosserie findet vorzugsweise in einem Scharniergelenk bzw. bei einem Dreiecksquerlenker in zwei Scharniergelenken statt. Das Schwingungsdämpferrohr wird vorzugsweise in einem elastischen Gummilager an der Karosserie gelagert.

Über die Radaufhängung wird ein Rad 5 des Kraftfahrzeugs mit der Karosserie (nicht dargestellt) verbunden. Das Rad 5 ist dabei mit seiner horizontalen Dre h-achse an einem Achsschenkel 1 als Lagerelement drehbar gelagert. Der Achsschenkel 1 ist seinerseits um eine vertikale Achse 6 drehbar in einem gabelförmigen Träger 3 gelagert. Die vertikale Achse 6 läuft durch das Zentrum Z des Rades 5 beziehungsweise in großer Nähe an diesem vorbei. Vorzugsweise beträgt ihr Abstand vom Zentrum weniger als 80%, besonders bevorzugt weniger als 20% der Rad- bzw. Felgenbreite. Durch diese drehbewegliche Lagerung des Achsschenkels 1 werden Hebelwege verkürzt, welche bei üblichen Radaufhängungen zur Übertragung von störenden Kräften auf die Lenkung führen.

Der Träger 3 ist an seinem oberen Ende über den Dämpferkolben 4 eines Federbeins mit der Karosserie gekoppelt. Weiterhin ist er an seinem unteren Ende in einem Scharniergelenk 2 mit der Scharnierachse 10 über den gabelförmigen Lenker 8 (Figur 2) mit der Karosserie verbunden, wobei der Lenker 8 seinerseits drehbeweglich um eine Achse 11 an der Karosserie befestigt ist. Durch diese zusätzliche Ankopplung des Trägers 3 an die Karosserie werden dessen Freiheitsgrade reduziert, was zu einer zusätzlichen Isolation und einer erhöhten Steifheit führt. Die beiden Schwenkachsen 10 und 11 des Lenkers 8 sind vorzugsweise im Wesentlichen parallel zueinander und darüber hinaus vorzugsweise parallel zur Fahrzeuglängsachse.

In Figur 2 ist eine mögliche Ausgestaltung der vorstehend beschriebenen Radaufhängung perspektivisch dargestellt. Dabei ist insbesondere der Aufbau des Federbeines aus Dämpferkolben 4 und Schraubendruckfeder 7 erkennbar. Ferner ist am Achsschenkel 1 ein Ansatz 9 zu sehen, an welchem ein weiteres Lenkerelement beziehungsweise eine Spurstange befestigt werden kann.

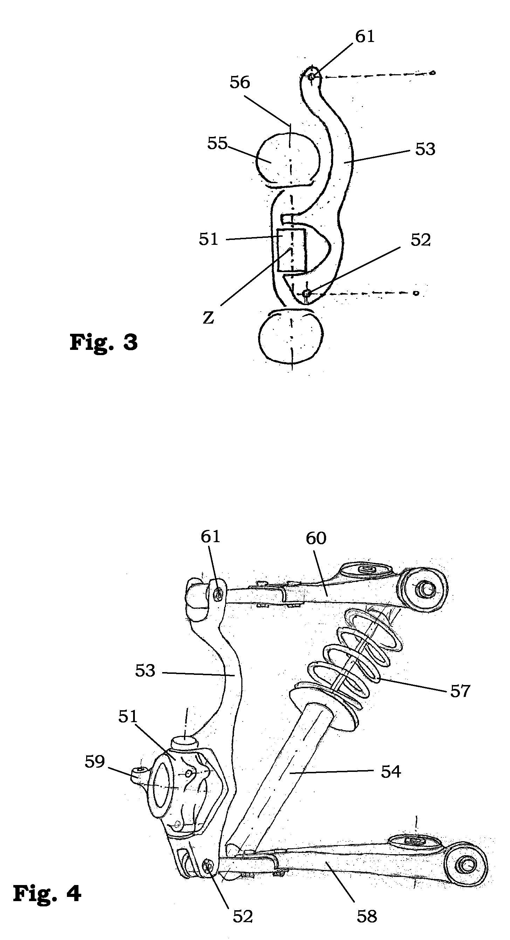

Die Figuren 3 und 4 zeigen eine andere Ausgestaltung einer Radaufhängung in einer schematischen Seitenansicht. Erfindungsgemäß ist der Achsschenkel 51, welcher ein Rad 55 drehbeweglich lagert, um eine vertikale Achse 56 drehbar an dem Träger 53 befestigt. Bei dem Träger 53 handelt es sich um eine bogenförmige Gabel, welche an ihrem oberen Ende in einem Gelenk 61 und an ihrem unteren Ende in einem Gelenk 52 drehbeweglich mit einem Querlenker 60 beziehungsweise einem Querlenker 58 verbunden ist. Die genannten Querlenker 58, 60 sind ihrerseits drehbeweglich mit der Karosserie verbunden.

Wie die perspektivische Ansicht von Figur 4 zeigt, ist der untere Querlenker 58 über ein Federbein enthaltend einen Dämpferkolben 54 und eine Feder 57 mit dem oberen Querlenker beziehungsweise mit der Karosserie gekoppelt. Ferner ist am Achsschenkel 51 ein Ansatz 59 zu sehen, an welchem ein weiteres Lenkerelement beziehungsweise eine Spurstange befestigt werden kann.

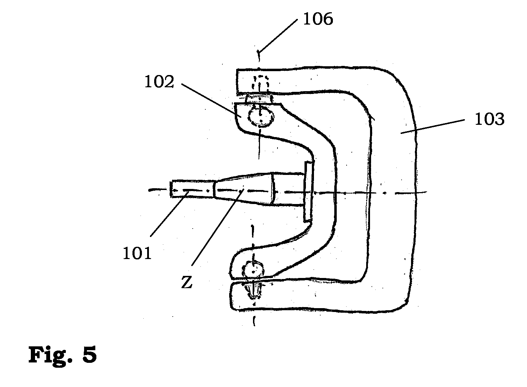

Figur 5 zeigt schließlich ein Detail einer Radaufhängung, bei welcher das Rad nicht in einem Achsschenkel, sondern an einer Spindel 101 befestigt ist. Die Spindel 101 wird dabei von einem U-förmigen Joch 102 getragen, welches seinerseits an einem U-förmigen Träger 103 drehbeweglich um die vertikale Achse 106 befestigt ist. Erfindungsgemäß verläuft die vertikale Achse 106 wiederum (annähernd) durch das Zentrum Z der Radaufhängung.

## Patentansprüche

1. Radaufhängung für ein Kraftfahrzeug, enthaltend
a) ein Lagerelement (1, 101) für die Radachse;
b) einen Träger (3, 103), an welchem das Lagerelement bezüglich einer im Wesentlichen vertikalen Achse (6, 106) drehbar gelagert ist, wobei die vertikale Achse nahe dem Radzentrum (Z) verläuft;
c) ein Federbein (4), das mit dem Träger (3) verbunden und an der Karosserie abgestützt ist;
d) einen Lenker (8), welcher mit der Karosserie gekoppelt und mit dem Träger (3) in einem Scharniergelenk (2) verbunden ist;
**dadurch gekennzeichnet, daß**
der Lenker (8) drehbeweglich um eine Achse (11) an der Karosserie gelagert ist.

2. Radaufhängung nach Anspruch 1,
**dadurch gekennzeichnet, daß**
das Lagerelement als Achsschenkel (1) ausgebildet ist.

3. Radaufhängung nach Anspruch 1,
**dadurch gekennzeichnet, daß**
das Lagerelement als Spindel (101) ausgebildet ist.
